# EUROPEAN PATENT APPLICATION

(11) **EP 2 147 598 A1**
(43) Date of publication of application: **27.01.2010**
(21) Application number: 09251386.0
(22) Date of filing: 22.05.2009
(51) Int. Cl.: A01K 97/12, G05G 1/08, G05G 5/20

(54) **A device having a plurality of rotatable hand-operable knobs**

(30) Priority: 21.07.2008 GB 0813327
(71) Applicant: Fox International Group Limited, Hainault, Essex IG6 3UT (GB)
(72) Inventor: Little, Mark, Farnham, Surrey GU9 7BW (GB)
(74) Representative: Crouch, David John

(57) **Abstract**

A device (10) having a plurality of rotatable hand-operable knobs (36), rotation of which changes respective parameters of the device (10). Each knob (36) has a toothed wheel (90, 92, 93) fixed relative thereto, and rotatable therewith. The wheels (90, 92, 93) have respective clicker portions (94) engaging the teeth thereof to define respective different positions of the wheels (90, 92, 93), in which the clicker portions (94) are integral with one and the same part (96).

## Description

The present invention relates to a device having a plurality of rotatable hand-operable knobs, rotation of which changes respective parameters of the device, each knob having a toothed wheel fixed relative thereto and rotatable therewith, the wheels having respective clicker portions engaging the teeth thereof to define respective different positions of the wheels.

A disadvantage of previously proposed constructions of such a device is the number of parts which have to be made and the consequent complexity of construction involved.

The present invention seeks to provide a remedy for this problem.

Accordingly, the present invention is directed to a device having the construction set out in the opening paragraph of the present specification, in which the clicker portions are integral with one and the same part.

This construction is especially advantageous where the device is a fish-bite detector.

Preferably, the said part comprises a series of anchor portions connected together by elongate bridging portions with the clicker portions extending laterally from respective bridging portions. The anchor portions may engage anchor formations provided on the device. The anchor portions may comprise rings and the anchor formations may comprise respective spigots which extend through the rings. Alternatively, the anchor portions may comprise spigots and the anchor formations may comprise rings which receive those spigots.

Preferably, the said part is made of a resilient material, preferably a resilient plastics material, so that each bridging portion may flex as the clicker portion is moved by rotation of its associated toothed wheel, relative rotation between each ring and engaging pivot accommodating such flexing.

Each anchor portion may be provided with an arm which extends outwardly therefrom with an end which is located between two teeth on an adjacent toothed wheel. Each arm may have a bend in it.

Preferably in that case the angle between the part of the arm having the said end and the part of the arm joined to the anchor portion are at an acute angle to one another, to increase the flexibility of the arm. To increase this flexibility still further, a part of the arm adjacent to the bend may be narrowed.

One of the arms may be straight instead of having a bend in it, and may have its narrowed portion adjacent to the position of the arm where it joins its anchor portion. Preferably this arm is at the end of the said part.

Preferably, the device has three hand-operable knobs with respective fixed wheel teeth and respective such clicker portions, the three knobs controlling respectively the volume, tone and sensitivity of an alarm of a bite detector.

An example of a fish-bite detector embodying the present invention will now be described in greater detail with reference to the accompanying drawings, in which:
- Figure 1: shows a perspective view of a fish-bite detector embodying the present invention, from the front, from above, and to one side;
- Figure 2: shows details on a larger scale of the interior of the detector shown in Figure 1;
- Figure 3: shows a perspective view of the parts shown in Figure 2; and
- Figure 4: shows a perspective view of the parts corresponding to those shown in Figures 2 and 3, in a modification thereof.

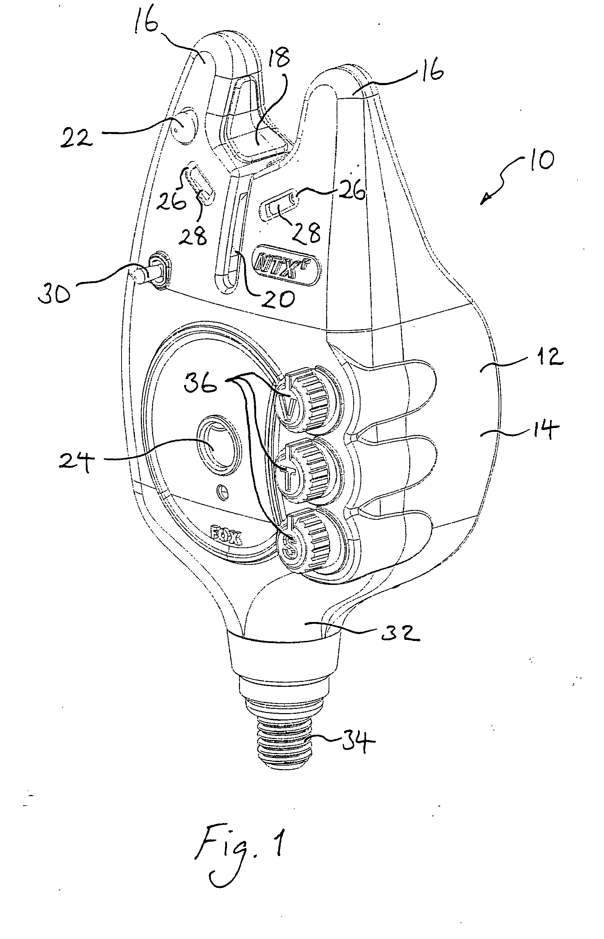

The fish-bite detector 10 shown in Figure 1 comprises a rigid plastics housing 12 having a bulbous lower rear portion for housing batteries and two spaced-apart upwardly extending ear portions 16 defining a crotch portion 18 in which can be seated a portion of a fishing rod (not shown) when the detector is in use. A slot 20 extends downwardly from the crotch portion 18 within which is arranged a wheel (not shown), the fishing line of the rod engaging this wheel when the detector is in use. Sensors (not shown) are provided to detect rotation of the wheel. The sensors (not shown) are connected to circuitry to trigger illumination of a multi-colour light emitting diode unit 22 and to emit an audible signal from a beeper 24, also positioned on a front face of the detector. The front of the detector is also provided with two slanting elongate beta light recesses 26 accommodating respective elongate beta lights 28.

The front face of the detector is also provided with an on/off toggle switch 30 which is so constructed that in its on position the toggle is substantially horizontal and in its off position the toggle is slanted upwardly. The lower end 32 of the detector tapers down to a screw threaded shank 34 for attaching the detector to a bankstick or other support.

Three generally circular rotary adjustment knobs 36 are provided on the front face of the detector 10 in a linear arrangement one above the other. The uppermost knob 36 controls the volume of the beeper 24, the middle switch controls the tone of the beeper 24, and the lowermost switch controls the sensitivity of the illumination of the detector.

The circuitry of the detector shown is located in the interior thereof, is not central to the present invention, and will not be described because it is well known in the art and is fully disclosed for example in EP-A-0570117 and in EP-A-1614348, the full contents of both of which are hereby imported into this present specification.

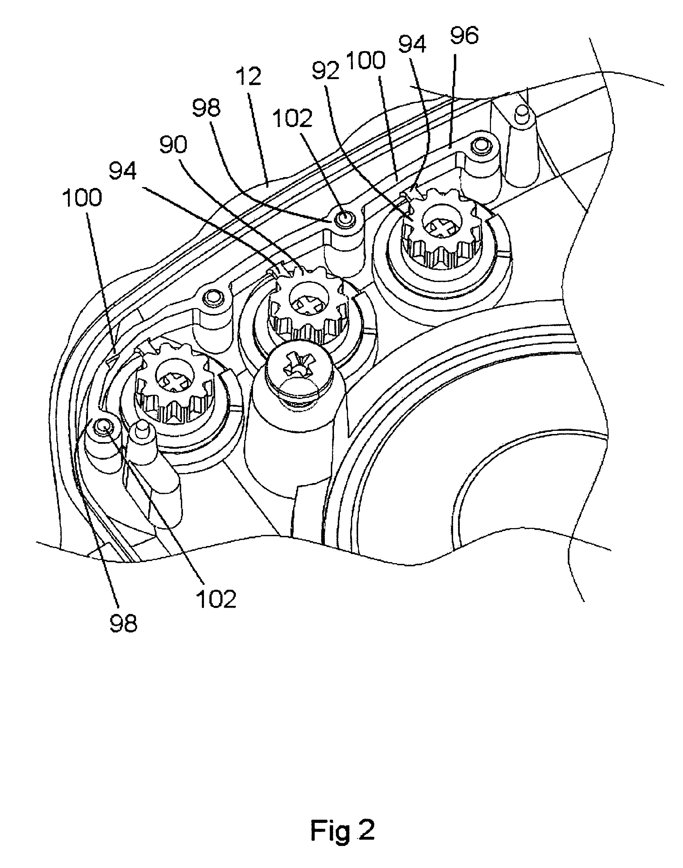

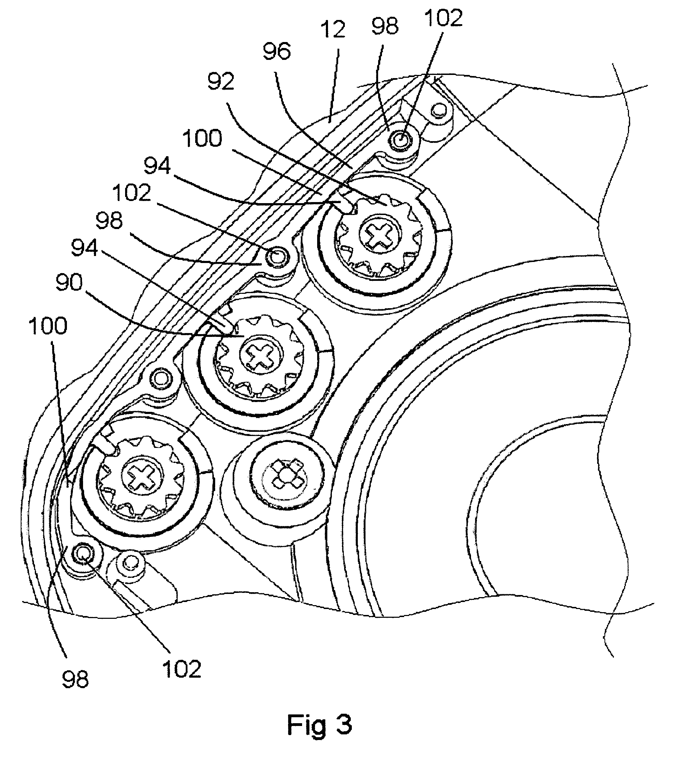

Figures 2 and 3 show the interior parts of the detector 10, more especially the reverse sides of the lower of the two control knobs 36, more especially for the tone and sensitivity of the bite alarm. Fixedly attached to the rear of these knobs so as to be rotatable therewith are respective toothed wheels 90 and 92. The volume knob 36 is also provided with such a toothed wheel (not shown).

Respective clicker portions 94 are provided for the toothed wheels 90 and 92, located between two teeth which are for the time being adjacent to the clicker portion, to define relative positions for the knobs 36. The clicker portions 94 are integral with one and the same elongate plastics part 96. The latter comprises a series of rings of plastics material 98 interconnected by elongate bridging portions 100 laterally from which extend the clicker portions 94 respectively. The rings 98 are threaded over spigots 102 fixedly attached to the detector housing 12.

As one of the control knobs 36 is rotated, its associated clicker portion 94 is able to rotate slightly and move outwardly from the associated toothed wheel 96 by flexing of the bridging portion 100 to which it is attached. Flexing of this bridging portion 100 is facilitated by relative rotation of the rings 98 at the opposite ends of the bridging portion 100 about their associated spigots 102.

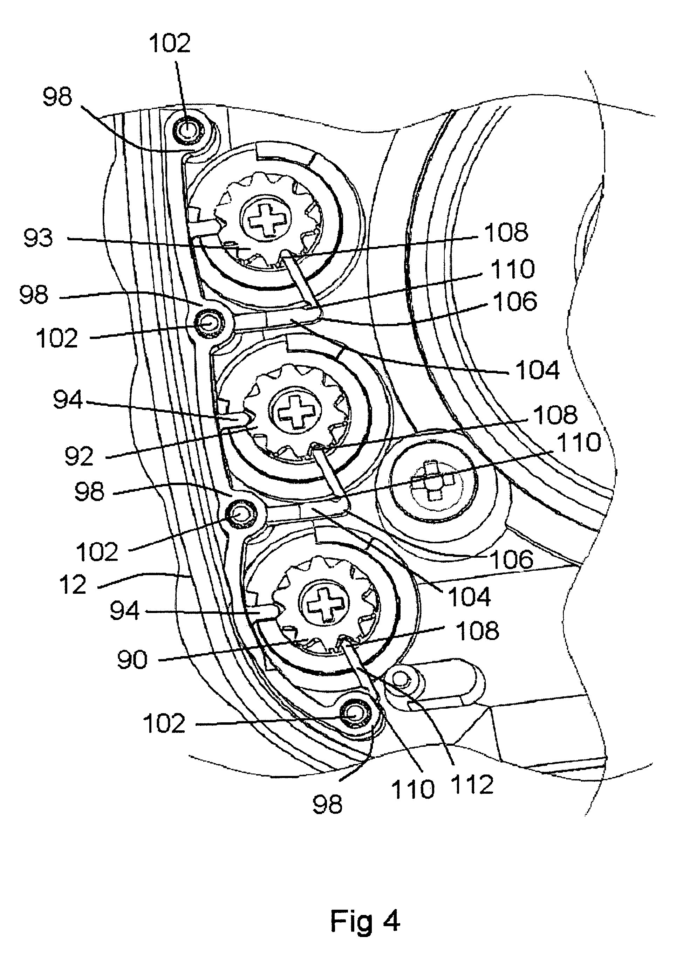

In the modification shown in Figure 4, there is a further clicker device for each toothed wheel 90, 92, 93 in the form of an arm 104 extending inwardly from an anchoring ring 98. Each arm 104 for the toothed wheels 92 and 93 tapers in depth in the direction away from its ring 98. At the end of the taper, the arm bends through an acute angle at a bend 106 into a portion of the arm having a distal end 108 located between the teeth of the associated toothed wheel 92 or 93. Each arm 104 is narrowed at a neck portion 110 adjacent to the bend. A further clicker arm 112 for the toothed wheel 90 extends from the anchoring ring 98 at the end of the part 96 without the tapering part and with the narrowed portion 110 adjacent to the anchoring ring 98.

As one of the toothed wheels 90, 92 or 93 is rotated, the resulting lifting of the associated clicker portion 94 urges the associated clicker arm 104 or 106 towards the wheel 92, improving the firmness with which the position of the wheel is held between clicks.

Numerous modifications and variations to the illustrated detector may occur to the reader without taking the resulting construction outside the scope of the present invention. For example, the plastics part 96 may have spigots instead of rings 98, which spigots are recessed in recesses formed in the material of the housing 12.

## Claims

1. A device (10) having a plurality of rotatable hand-operable knobs (36), rotation of which changes respective parameters of the device (10), each knob (36) having a toothed wheel (90, 92, 93) fixed relative thereto, and rotatable therewith, the wheels (90, 92, 93) having respective clicker portions (94) engaging the teeth thereof to define respective different positions of the wheels (90, 92, 93), **characterised in that** the clicker portions (94) are integral with one and the same part (96).

2. A device according to claim 1, **characterised in that** the said part (96) comprises a series of anchor portions (98) connected together by elongate bridging portions (100) with respective clicker portions (94) extending laterally from the bridging portions (100).

3. A device according to claim 2, **characterised in that** the anchor portions (98) engage anchor formations (102) provided on the device (10).

4. A device according to claim 3, **characterised in that** the anchor portions (98) comprise rings (98) and the anchor formations (102) comprise respective spigots (102).

5. A device according to claim 3, **characterised in that** the anchor portions (98) comprise spigots and the anchor formations comprise rings which receive those spigots.

6. A device according to any one of claims 2 to 5, **characterised in that** each anchor portion (98) is provided with an arm (104, 112) which extends outwardly therefrom with an end (108) which is located between two teeth on an adjacent toothed wheel (90, 92, 93).

7. A device according to claim 6, **characterised in that** each arm (104) has a bend (106) in it.

8. A device according to claim 7, **characterised in that** the angle between the part of the arm (104) having the said end (108) and the part of the arm (104) joined to the anchor portion (98) are at an acute angle to one another, to increase the flexibility of the arm (104).

9. A device according to claim 8, **characterised in that** a part (110) of the arm (104) adjacent to the bend is narrowed.

10. A device according to claim 9, **characterised in that** one of the arms is straight instead of having a bend in it, and has its narrowed portion (110) adjacent to the position of the arm (112) where it joins its anchor portion (98).

11. A device according to claim 10, **characterised in that** the arm (112) referred to in claim 10 is at the end of the said part (96).

12. A device according to any preceding claim, **characterised in that** it has three rotatable hand-operable knobs (36) with respective fixed wheel teeth and respective such clicker portions (94), the three knobs (36) controlling respectively the volume, tone and sensitivity of an alarm of the bite detector (10).

13. A device according to any preceding claim, **characterised in that** the said part (96) is made of a resilient material so that each bridging portion (100) may flex as the clicker portion (94) is moved by rotation of its associated toothed wheel (90, 92, 93), relative rotation between each ring (98) and engaging pivot (102) accommodating such flexing.

14. A device according to claim 13, **characterised in that** the said part is made of a resilient plastics material.
